# EUROPEAN PATENT APPLICATION

(11) **EP 2 385 729 A2**
(43) Date of publication of application: **09.11.2011**
(21) Application number: 11159075.8
(22) Date of filing: 21.03.2011
(51) Int. Cl.: H04W 48/18

(54) **Control of electronic features in a network**

(30) Priority: 07.05.2010 GB 1007663
(71) Applicant: Vodafone IP Licensing Limited, The Connection Newbury Berkshire RG14 2FN (GB)
(72) Inventor: Russell, Nick, Newbury, Berkshire RG14 2FN (GB); Dawes, Peter, Newbury, Berkshire RG14 2FN (GB); Mustapha, Mona, Newbury, Berkshire RG14 2FN (GB)
(74) Representative: Sneary, Adrian Bernard

(57) **Abstract**

A first electronic device is in communication with a base station of a network by means of a first communications technology and a second electronic device is in communication with the network by means of a second communications technology. The first and second electronic devices may be controlled by: identifying at a controller connected to the network that the first electronic device and the second electronic device have a common third communications technology, different from the first and second communications technologies; obtaining configuration characteristics for the first and second electronic devices at the controller; and determining at the controller that a communications link between the first and second electronic devices can be established using the common third communications technology, on the basis of the obtained configuration characteristics. The network is preferably a cellular radio network.

## Description

### Technical Field of the Invention

The present invention relates to a method of controlling a first electronic device and a second electronic device that are linked to a network and a controller in a network. The network is preferably a cellular radio network and at least one of the electronic devices is preferably a mobile station of the cellular network.

### Background to the Invention

Data communications networks are increasingly heterogeneous, relying on different access technologies. Consequently, users are being provided with terminals have multiple radio technologies, some of which are designed for network access and others for point-to-point, peer-to-peer or ad hoc network communication.

Cellular networks generally provide services to mobile stations through direct communication between a base station of the cellular network and the mobile station using a cellular radio access technology. Mobile stations may, in fact, include more than one cellular radio access technology. Existing cellular radio access technologies include GSM, Universal Mobile Telecommunications System (UMTS) and Long Term Evolution (LTE), each of which is standardised by the Third Generation Partnership Project (3GPP).

In view of the above, it is becoming increasingly common for mobile stations (also referred to as User Equipment, UE) to have at least one other communications technology, as well the cellular radio access technology. For example, BlueTooth, Wireless Local Area Network (WLAN or WiFi, including IEEE 802.11a/b/g/n), optical, USB, Ethernet. However, these technologies are commonly disabled or switched off, in order to preserve battery life and prevent unsecure, unauthorised access to the mobile station. For example, a communications technology which allows open access may cause malware, viruses and other unauthorised data transfers of files to be sent to the mobile station without the users' knowledge.

Enabling these other communications technologies could allow communication links to be initiated or configured between mobile stations to improve overall quality of service and network efficiency. The battery consumption for communication over cellular radio access technologies may be higher and the link quality lower than for communication using an alternative technology. In many cases, the cellular network operator may also receive benefits. For example, using an alternative communications technology, may reduce data traffic load on the operator's mobile cellular network, by diverting some traffic to use another communications technology.

However, there are a number of challenges in implementing such networking efficiently. Mobile station users may find it difficult to activate or configure a communications technology. Hardware may be implemented differently between mobile stations. Also, it is difficult to identify potential links using these communications technologies, as such an identification requires knowledge of the capabilities and configuration of other mobile stations. Users of mobile stations are reluctant to broadcast such information, in view of security and privacy concerns.

### Summary of the Invention

Against this background, there is provided in a first aspect, a method of controlling a first electronic device and a second electronic device. The first electronic device is in communication with a base station of a network by means of a first communications technology and the second electronic device is in communication with a base station of the network by means of a second communications technology. The method comprises: identifying at a controller connected to the network that the first electronic device and the second electronic device have a common third communications technology, different from the first and second communications technologies; obtaining configuration characteristics for the first and second electronic devices at the controller; and determining at the controller that a communications link between the first and second electronic devices can be established using the common third communications technology, on the basis of the obtained configuration characteristics.

In this way, the controller connectable, connected to or within the network identifies one or more communications technologies that are common to the hardware of both the first and second electronic devices and checks configuration characteristics to see if a communications link can be established between them. Then, effectively only one connection and in some cases no connection to the network is used, rather than two or more. This improves network efficiency or conversely reduces network congestion.

The present invention is especially applicable when the network is a cellular network and the base station is part of the cellular network. The controller is preferably also part of the cellular network. Then, the first electronic device may typically be a mobile station. Optionally, the second electronic device may also be a mobile station in communication with a base station of a cellular network (which may or may not be the same base station as that used by the first electronic device).

Advantageously, the first communications technology is a cellular radio access technology. Beneficially, the second communications technology is also a cellular radio access technology, but alternatively the second communications technology may be non-cellular, although the second electronic device is in communication with the cellular network. Then, by controlling the electronic devices from the cellular network, the additional information available to the cellular network (for example, including secure location information and subscriber details) can be used. Also, the cellular communication links can be employed to interrogate remotely the electronic devices, without necessitating user involvement at a sophisticated level. Optionally, the third communications technology is a non-cellular technology.

The common third communications technology may comprise one or more of: BlueTooth, Local Area Network including Wireless LAN (WLAN or WiFi, for example IEEE 802.11a/b/g/n), optical, USB, Ethernet, ADSL. Advantageously, the communications link may be direct (for instance, peer-to-peer) between the first and second electronic devices using the common third communications technology. Optionally, it may take place using a relay station, but still using the common third communications technology. For example, the relay station may be a WLAN access point or router.

Optionally, the first and second communications technologies may be the same, but alternatively they may be different. The first and second communications technologies may be one of: GSM; Universal Mobile Telecommunications System (UMTS); Long Term Evolution (LTE); Interim Standard 95 (IS-95); CDMA2000; IEEE 802.16; and any other cellular radio access technology.

The configuration characteristics may be any characteristic for the first electronic device and any characteristic for the second electronic device, which the controller can use in order to determine whether a communications link may be possible between the first and second electronic devices. Although the controller may use only one configuration characteristic for each electronic device, many embodiments may use more than one configuration characteristic for each electronic device.

In embodiments, the obtained configuration characteristics may comprise one or more of: identity of the third communications technology; a specification for hardware implementing the third communications technology at the first electronic device; a specification for hardware implementing the third communications technology at the second electronic device; a hardware status for the first electronic device; a hardware status for the second electronic device; and a geographical location of the first electronic device relative to a geographical location of the second electronic device. Preferably, the obtained configuration characteristics do not include whether the third communications technology is enabled for both the first and second electronic devices, although the obtained configuration characteristics may include whether the third communications technology can be enabled by a controller in the cellular network for both the first and second electronic devices.

Advantageously, the step of obtaining a configuration characteristic for the first electronic device may comprise receiving the configuration characteristic from the first electronic device. Alternatively, the step of obtaining a configuration characteristic for the first electronic device may comprise determining the configuration characteristic for the first electronic device on the basis of an identifier for the first electronic device and a database relating configuration characteristics and identifiers for electronic devices. For example, the identifier for the first electronic device may be an International Mobile Equipment Identity (IMEI) and with knowledge of the IMEI, the controller may identify the hardware capabilities of the first electronic device.

Although the step of obtaining a configuration characteristic for the first electronic device has been identified above, the step of obtaining a configuration characteristic for the second electronic device can be carried out using any of the above processes. Optionally, the step of obtaining a configuration characteristic for the second electronic device may use a different process from the step of obtaining a configuration characteristic for the first electronic device.

Preferably, the obtained configuration characteristics comprise a geographical location of the first electronic device relative to a geographical location of the second electronic device. This is usually, but not necessarily, in addition to any other characteristics as detailed above. In this case, the step of obtaining the configuration characteristic may optionally comprise receiving a location for the first electronic device at the controller.

It will be understood that the geographical location of the first electronic device relative to a geographical location of the second electronic device may be determined by the controller, the cellular network or a electronic device on the basis of a geographical location of the first electronic device and a separate geographical location of the second electronic device. These may be provided by each electronic device. For instance, the first electronic device may have an integrated location determination system, such as GPS, and report the determined location to the controller (optionally, via the cellular network). The cellular network can additionally or alternatively provide a location for the first electronic device to the controller, for instance using a cell ID, Location Area Identification (LAI), Routing Area Identification (RAI), Tracking Area Identification (TAI) or using other measurement techniques such as Time Difference of Arrival (TDoA). It will be understood that the geographical location of the second electronic device can be determined using any of the above described techniques.

Beneficially, the method further comprises communicating integrity information from the cellular network to the second electronic device, said integrity information allowing the integrity of data transferred over a communications link between the first electronic device and the second electronic device using the common third communications technology. This integrity information can include a file name or identifier, data size, checksum, Cyclic Redundancy Check (CRC) information or Message-Digest algorithm 5 (MD5) information. This allows the second electronic device to check that the information it receives is the same as the information that the cellular network wishes to provide. This helps to prevent transmission of malicious data or unauthorised usage. Additionally or alternatively, a similar process may take place in respect of the first electronic device, depending upon the flow of data.

Preferably, the method further comprises instructing the first electronic device and the second electronic device from the controller to configure the communications link between the first electronic device and the second electronic device using the common third communications technology. This allows the controller to use the cellular communication links for remotely controlling the electronic devices, without necessitating user involvement at a sophisticated level.

More preferably, the method further comprises disabling the configured communications link after a predetermined period of time or subsequent to the transfer of data between the first electronic device and the second electronic device over the configured communications link. Disabling the communications link may preserve battery power in the electronic device. Optionally, this comprises disabling the third communications technology on the first electronic device subsequent to the transfer of data. Additionally or alternatively, this may comprise disabling the third communications technology on the second electronic device subsequent to the transfer of data. Such steps help to prevent unauthorised access to the first electronic device or the second electronic device through the third communications technology.

In the preferred embodiment, the method further comprises identifying data for transmission over the communications link between the first and second electronic devices. Then, the step of determining that communication between the first and second electronic devices would be possible may be based on at least one characteristic of the identified data. This allows the controller to check that any communication link established using the common third communications technology would support the desired use of this communications link, especially for streaming purposes. The at least one characteristic of the identified data may include: a data size; a guaranteed bit-rate requirement; a minimum bit-rate requirement; a latency requirement.

In such an embodiment, the network operator may determine when two electronic devices have data to share and are close enough to connect. It may then automatically invoke the same communications technology on both of them for a set period of time or until a certain event has occurred (for example, a file has been transferred). It may also specify the file to send from the originating electronic device, and what file to expect on the terminating electronic device.

In some embodiments, the step of identifying data for transmission over the communications link comprises receiving a request at the controller to transfer data between the second electronic device and the cellular network. Here, the method may further comprise identifying at the controller that the communication link between the first electronic device and a base station of the cellular network is of higher quality than the communication link between the second electronic device and a base station of the cellular network for transfer of the data.

In these embodiments, the method may further comprise: redirecting the second electronic device to communicate with the cellular network via the communication link to the first electronic device; and instructing the first electronic device to redirect transmissions received from the second electronic device for the cellular network over the communications link to the cellular network and to redirect transmissions received from the cellular network for the second electronic device to the second electronic device over the communications link.

In other embodiments, the step of identifying data for transmission over the communications link comprises identifying at the controller that the second electronic device has requested data from the cellular network that is the same as either: data requested from the cellular network by the first electronic device; or data stored at the first electronic device. Here, the method optionally further comprises redirecting the second electronic device to receive the requested data from the first electronic device over the communications link. If the data is not already available at the first electronic device, the method optionally further comprises instructing the first electronic device to download the requested data using the first communications technology over the cellular network.

In yet further embodiments, the step of identifying data for transmission over the communications link may comprise identifying at the controller that the second electronic device has requested communication with the first electronic device. Using the common third communications technology may allow this communication to take place directly or through a relay station in a more efficient way.

In a second aspect, the present invention may provide a computer program, configured when operated on a processor to carry out any method as described herein. The computer program may be split in its functionality over different logical or geographical entities within or connected to the cellular network.

In a third aspect, the present invention may provide a controller connectable to a network. The network comprises: a first electronic device arranged for communication with a base station of the network by means of a first communications technology; and a second electronic device arranged for communication with a base station of the network by means of a second communications technology. The controller comprises a processor arranged to identify that the first electronic device and the second electronic device have a common third communications technology, different from the first and second communications technologies, to obtain configuration characteristics for the first and second electronic devices and to determine that a communications link between the first and second electronic devices can be established using the common third communications technology, on the basis of the obtained configuration characteristics.

Preferably, the network is a cellular network. The controller is optionally a part of the network, but can alternatively be partially or completely distinct from the network. Beneficially, the first electronic device is then a first mobile station. Optionally, the second electronic device is a second mobile station. The controller or network may additionally comprise features arranged to implement any of the features described with reference to the method of operation detailed herein.

It will also be understood that the present invention is not limited to the specific combinations of features explicitly disclosed, but also any combination of features that are described independently and which the skilled person could implement together.

### Brief Description of the Drawings

The invention may be put into practice in various ways, one of which will now be described by way of example only and with reference to the accompanying drawing in which:

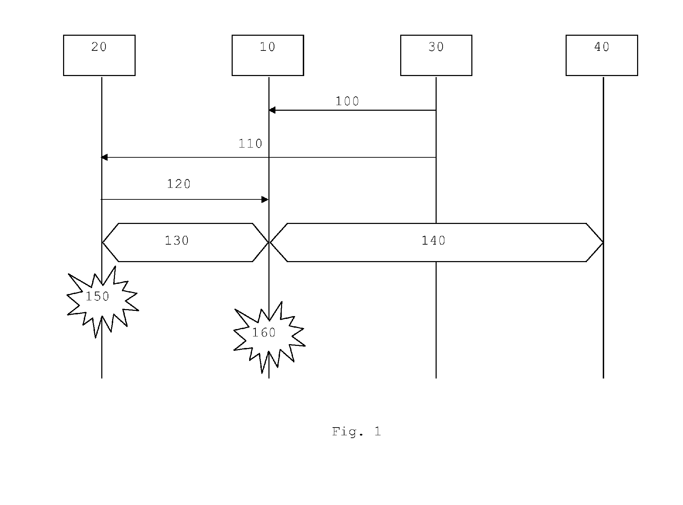

Figure 1 shows a schematic illustration of data flow between parts of a cellular network.

### Detailed Description of a Specific Embodiment

Referring first to Figure 1, there is shown a schematic illustration of data flow between parts of a cellular network. In the network is: a first mobile station 10; a second mobile station 20; a control server (or controller) 30; and a content server 40. Where the term mobile station is used, it is considered equivalent to the term User Equipment (UE) used in 3GPP standards. It does not require the device to be mobile, but simply denotes a client of the cellular network.

The control server 30 is a part of (or connected to) the cellular network infrastructure of a network operator. It is intended to identify possible communications links between mobile stations and, where an improvement in network efficiency can be made, to make use of any relevant links. To achieve this, the control server 30 uses configuration information about the mobile stations.

The control server 30 especially identifies when two (or more) mobile stations that have one or more commonly supported communications technologies are in proximity of each other to enable a communications link to be established.

Determining whether the mobile stations have any commonly supported communications technologies can be achieved by either: monitoring a subset or all mobile stations on the mobile cellular network for the current cell ID or Location Area Identification (LAI), Routing Area Identification (RAI) or Tracking Area Identification (TAI); or the mobile station (possibly triggered by software on the mobile station) reporting its current location to a node in the network. The mobile station may provide this information in a variety of ways, for example using GPS coordinates (if the mobile station has GPS capability), cell identification, LAI, RAI or TAI. The control server 30 then compares the location of the mobile stations.

Determining the nature of the communications technology, the characteristics of this technology (such as maximum upload/download speed) and status (for example, mobile cellular network coverage status, battery charge status, free storage space available, current items previously downloaded and cached) for a mobile station can be achieved in a number of ways. A first way is for the control server 30 to monitor a subset or all the mobile stations on the cellular network for their International Mobile Equipment Identity (IMEI) number, and to compare this to a database of known communications technology capabilities for the particular manufacturer of the equipment and model identified. Alternatively or additionally, client software on the mobile station may report its communications technology capabilities to the control server 30.

The control server 30 then identifies when a group comprising at least two mobile stations that support one or more common communications technologies are in geographical proximity of each other. It then monitors this group for when any of the following events occur:
a) two (or more) mobile stations request to retrieve the same resource (e.g. a file or a stream) from a server in the mobile cellular network (or a server in a network connected to the mobile cellular network);
b) two (or more) mobile stations request to retrieve a resource (e.g. a file or a stream) from a server in the mobile cellular network (or a server in a network connected to the mobile cellular network) that one or more other mobile stations in the same group already has stored locally (e.g. downloaded in a mobile station and instructed by the network to cache it for a minimum or maximum period of time);
c) one or more mobile stations requests to upload or download a resource (e.g. file or stream) to or from a server in the mobile cellular network (or a server in a network connected to the mobile cellular network) but one mobile station within the group is deemed to be more suitable for this communication, for example due to it having better coverage, better battery charge, supporting faster upload or download; or
d) one or more mobile stations request to transfer a resource (e.g. file or stream) to or from another mobile station within the group.

If either event a) or event b) of the above is detected by the control server 30, then the following sequence of events is carried out. In this case, the group comprises the first mobile station 10 and the second mobile station 20 and the second mobile station 20 requests a resource from the cellular network.
1. The control server 30 sends a first instruction 100 to the first mobile station 10. The first mobile station 10 is thereby instructed to act as a "local host". The first mobile station 10 is also instructed: to enable one or more communications technologies and to expect at least one request for downloading a particular resource over the specified one or more communication technologies from the second mobile station 20; and to enable access to the requested resource for the second mobile station 20.
2. The control server 30 sends a second instruction 110 to the second mobile station 20. The second mobile station 20 is instructed: to enable the relevant one or more communications technologies that are also supported by the first mobile station 10; and to redirect their request for the resource to the first mobile station 10 via the one or more common communications technologies.
3. A communications link between the first mobile station 10 and the second mobile station 20 is initiated, identified or configured. The second mobile station 20 then sends a request transmission 120 to the first mobile station 10 over this communications link. This request transmission 120 requests the required resource from the first mobile station 10 using the communications link. The data for that resource is transmitted between the first mobile station 10 and the second mobile station 20 in data communication 140. If this data is not already available at the first mobile station 10, then the first mobile station 10 obtains this data from the content server 40 in data communication 150.
4. The second mobile station carries out a check procedure 150, comprising the following steps. If transfer of the resource from the first mobile station 10 to the second mobile station 20 is successful, then the second mobile station 20 closes its connection to the first mobile station 10 and may disable or re-configure the one or more communications technologies into their configuration prior to the second instruction 110 from the control server 30. This maintains security and preserves battery life at the second mobile station.
5. If transfer of the resource to the second mobile station 20 is unsuccessful, then the second mobile station 20 may try another mobile station to act as a "local host" (not shown). Alternatively, the second mobile station 20 may initiate a connection to the content server 40 via the cellular network or another network and attempt to download the resource in this way. The second mobile station 20 may disable the one or more communications technologies, as above.
6. Once the first mobile station 10 has served the particular resource (or resources, if multiple requests are being serviced), it then disables or re-configures the one or more common communications technologies into their configuration prior to the first instruction 100 from the control server 30. This takes place in a terminating procedure 160.

If event c) as described above is detected by the control server 30, then the following sequence of events is carried out. In this case, the group comprises the first mobile station 10 and the second mobile station 20 and the first mobile station 10 is deemed more suitable for communication with the cellular network.
1. The control server 30 sends a first instruction 100 to the first mobile station 10. The first mobile station 10 is thereby instructed to act as a "remote host". The first mobile station 10 is also instructed: to enable one or more communications technologies and to expect at least one request for uploading or downloading a particular resource over the specified one or more communication technologies from the second mobile station 20; and to access the requested resource's content server 40 in the cellular network (or in a network connected to the mobile cellular network).
2. The control server 30 sends a second instruction 110 to the second mobile station 20. The second mobile station 20 is instructed: to enable the relevant one or more communications technologies that are also supported by the first mobile station 10; and to redirect their request for the resource to the first mobile station 10 via the one or more common communications technologies.
3. A communications link between the first mobile station 10 and the second mobile station 20 is initiated, identified or configured. The second mobile station 20 then sends a request transmission 120 to the first mobile station 10 over this communications link. This request transmission 120 requests access to the required resource using the communications link. The data for that resource is transmitted between the second mobile station 20 and the first mobile station 10 in data communication 140 and between the first mobile station 10 and the content server 40 in data communication 150.
4. The second mobile station carries out a check procedure 150, comprising the following steps. If transfer of the resource from the first mobile station 10 to the second mobile station 20 is successful, then the second mobile station 20 closes its connection to the first mobile station 10 and may disable or re-configure the one or more communications technologies into their configuration prior to the second instruction 110 from the control server 30. This maintains security and preserves battery life at the second mobile station.
5. If transfer between the resource and the second mobile station 20 is unsuccessful, then the second mobile station 20 may try another mobile station to act as a "remote host" (not shown). Alternatively, the second mobile station 20 may initiate a connection to the content server 40 via the cellular network or another network and attempt to download the resource in this way. The second mobile station 20 may disable the one or more communications technologies, as above.
6. Once the first mobile station 10 has served the particular resource (or resources, if multiple requests are being serviced), it then disables or re-configures the one or more common communications technologies into their configuration prior to the first instruction 100 from the control server 30. This takes place in a terminating procedure 160.

If event d) as described above is detected by the control server 30, then the following sequence of events is carried out. In this case, the group comprises the first mobile station 10 and the second mobile station 20 and the second mobile station 20 wishes to transfer a resource to the first mobile station 10.
1. The control server 30 sends a first instruction 100 to the first mobile station 10. The first mobile station 10 is thereby instructed to act as a "target host". The first mobile station 10 is also instructed to enable one or more communications technologies and to expect at least one request to receive a particular resource over the specified one or more communication technologies from the second mobile station 20.
2. The control server 30 sends a second instruction 110 to the second mobile station 20. The second mobile station 20 is instructed: to enable the relevant one or more communications technologies that are also supported by the first mobile station 10; and to redirect their request to transmit the resource to the first mobile station 10 via the one or more common communications technologies.
3. A communications link between the first mobile station 10 and the second mobile station 20 is initiated, identified or configured. The second mobile station 20 then sends a request transmission 120 to the first mobile station 10 over this communications link. This request transmission 120 requests transmission of the resource using the communications link. The data for that resource is transmitted between the second mobile station 20 and the first mobile station 10 in data communication 140. (In this scenario, there is no data communication 150 between the first mobile station 10 and a content server 40.)
4. The second mobile station carries out a check procedure 150, comprising the following steps. If transfer of the resource to the first mobile station 10 from the second mobile station 20 is successful, then the second mobile station 20 closes its connection to the first mobile station 10 and may disable or re-configure the one or more communications technologies into their configuration prior to the second instruction 110 from the control server 30. This maintains security and preserves battery life at the second mobile station.
5. If transfer between the second mobile station 20 and the first mobile station 10 is unsuccessful, then the second mobile station 20 may initiate a connection to the first mobile station 10 via the cellular network and attempt to transfer the resource in this way. The second mobile station 20 may disable the one or more communications technologies, as above.
6. Once the first mobile station 10 has received the particular resource (or resources, if multiple requests are being serviced), it then disables or re-configures the one or more common communications technologies into their configuration prior to the first instruction 100 from the control server 30. This takes place in a terminating procedure 160.

In any of the above approaches, further security features may be enabled. For example, first mobile station 10 may commanded (by first instruction 100) to limit itself only to handle the identified resource or enable itself to handle any resources for a specified period of time. The specified period of time can optionally be infinity. Also, security information, such as Cyclic Redundancy Check (CRC) information or Message-Digest algorithm 5 (MD5) information may be transmitted as part of first instruction 100 and this may be used to establish whether the transfer between the first mobile station 10 and the second mobile station 20 was successful.

The protocol between the mobile cellular network and the first mobile station 10 and the second mobile station 20 for commanding and instructing the mobile stations need not be specific, but the skilled person would understand that it could be an extension of an appropriate existing protocol e.g. HTTP, SIP, FTP, RADIUS, Diameter.

It should be noted that the first mobile station 10 may act as a "local host", "remote host" or "target host" for one resource, but at the same time may access another resource via a third mobile station (not shown) acting as a "local host", "remote host" or "target host" for that other resource.

As an option to the above procedure, a mobile station may leave enabled any communication technology implemented at the mobile station that was not already disabled when the procedure was started (for example, if the user had previously manually enabled it).

It will immediately be appreciated that the method can be applied with more than two mobile stations, by extension of the approach taken above. In those cases, the server controller 30 would communicate with the three or more mobile stations over the cellular network.

Although the control server 30 is described as being part of the cellular network of a network operator, the skilled person will understand that it may be shared between network operators. The functionality of the control server has been identified as carrying out all of the identifications and determination described above, but the skilled person will appreciate that this functionality may be split between a number of different entities, which may include any combination of software and hardware, with potentially different physical locations or logical configurations.

Although the controller is advantageously located within the cellular network, it may be located outside the cellular network with a communications link between the controller and the cellular network.

In another embodiment, rather than using two mobile stations, one electronic device may be a mobile station and the other may be a fixed device in communication with the cellular network through another communications technology. For example, the second electronic device may be a computer (possibly a mobile computer, such as a laptop or tablet computer) linked to the cellular network through an ADSL connection. The control server 30 is able to send commands to the computer through the ADSL connection. This may allow the transfer of data to a mobile station proximate to the computer over a third communications technology, such as WLAN or BlueTooth, between the computer and the mobile station.

The skilled person will also recognise that embodiments of the invention can be implemented in which the network is not a cellular network. Moreover, it is not always necessary for either the first or second electronic devices to be mobile stations of a cellular network. For example, both devices could be computers, portable digital devices or other electronic communications devices.

## Claims

1. A method of controlling a first electronic device and a second electronic device, the first electronic device being in communication with a base station of a network by means of a first communications technology and the second electronic device being in communication with the network by means of a second communications technology, the method comprising:
identifying at a controller connected to the network that the first electronic device and the second electronic device have a common third communications technology, different from the first and second communications technologies;
obtaining configuration characteristics for the first and second electronic devices at the controller; and
determining at the controller that a communications link between the first and second electronic devices can be established using the common third communications technology, on the basis of the obtained configuration characteristics.

2. The method of claim 1, wherein the network is a cellular network and wherein the first electronic device is a first mobile station.

3. The method of claim 1 or claim 2, wherein the obtained configuration characteristics comprise one or more of:
identity of the third communications technology; a specification for hardware implementing the third communications technology at the first electronic device; a specification for hardware implementing the third communications technology at the second electronic device; a hardware status for the first electronic device; a hardware status for the second electronic device; and a geographical location of the first electronic device relative to a geographical location of the second electronic device.

4. The method of any of claims 1 to 3, wherein the step of obtaining a configuration characteristic for the first electronic device comprises:
receiving the configuration characteristic from the first electronic device or determining the configuration characteristic for the first electronic device on the basis of an identifier for the first electronic device and a database relating configuration characteristics and identifiers for electronic device.

5. The method of claim 3, wherein the obtained configuration characteristics comprise a geographical location of the first electronic device relative to a geographical location of the second electronic device.

6. The method of any preceding claim, further comprising:
communicating integrity information from the network to the second electronic device, said integrity information allowing the integrity of data transferred over a communications link between the first electronic device and the second electronic device using the common third communications technology.

7. The method of any preceding claim, further comprising:
instructing the first electronic device and the second electronic device from the controller to configure the communications link between the first electronic device and the second electronic device using the common third communications technology.

8. The method of claim 7, further comprising:
disabling the configured communications link after a predetermined period of time or subsequent to the transfer of data between the first electronic device and the second electronic device over the configured communications link.

9. The method of any preceding claim, further comprising:
identifying data for transmission over the communications link between the first and second electronic devices; and
wherein the step of determining that communication between the first and second electronic devices would be possible is based on at least one characteristic of the identified data.

10. The method of claim 9, wherein the step of identifying data for transmission over the communications link comprises receiving a request at the controller to transfer data between the second electronic device and the network, the method further comprising:
identifying at the controller that the communication link between the first electronic device and a base station of the network is of higher quality than the communication link between the second electronic device and a base station of the network for transfer of the data.

11. The method of claim 10, further comprising:
redirecting the second electronic device to communicate with the network via the communication link; and
instructing the first electronic device to redirect transmissions received from the second electronic device for the network over the communications link to the network and to redirect transmissions received from the network for the second electronic device to the second electronic device over the communications link.

12. The method of claim 9, wherein the step of identifying data for transmission over the communications link comprises identifying at the controller that the second electronic device has requested data from the network that is the same as either data requested from the network by the first electronic device or data stored at the first electronic device.

13. The method of claim 9, wherein the step of identifying data for transmission over the communications link comprises identifying at the controller that the second electronic device has requested communication with the first electronic device.

14. A computer program, configured when operated on a processor to carry out the method of any preceding claim.

15. A controller connectable to a network, the network comprising: a first electronic device arranged for communication with a base station of the network by means of a first communications technology; and a second electronic device arranged for communication with the network by means of a second communications technology, the controller comprising:
a processor arranged to identify that the first electronic device and the second electronic device have a common third communications technology, different from the first and second communications technologies, to obtain configuration characteristics for the first and second electronic devices and to determine that a communications link between the first and second electronic devices can be established using the common third communications technology, on the basis of the obtained configuration characteristics.
